# EUROPEAN PATENT SPECIFICATION

(11) **EP 3 121 092 B1**
(45) Date of publication and mention of the grant of the patent: **27.02.2019**
(21) Application number: 15290193.0
(22) Date of filing: 21.07.2015
(51) Int. Cl.: B61L 27/00, B61L 27/04, B61L 23/00, B61L 19/06, B61L 1/16, B61L 1/18, B61L 25/02

(54) **SYSTEM AND METHOD FOR RAIL VEHICLE EVACUATION**
SYSTEM UND VERFAHREN ZUR SCHIENENFAHRZEUGEVAKUIERUNG
SYSTÈME ET PROCÉDÉ D'ÉVACUATION DE VÉHICULE FERROVIAIRE

(43) Date of publication of application: 25.01.2017
(73) Proprietor: Siemens Mobility GmbH, 81739 München (DE)
(72) Inventor: Loric, Marina, F-75015 Paris (FR); Schossig, Frauke, D-38118 Braunschweig (DE)
(74) Representative: Maier, Daniel Oliver

(56) References cited:
- EP-A1- 0 822 909
- DE-A1-102013 210 081
- DE-B3-102007 026 399
- JP-A- 2004 359 089
- US-A1- 2015 108 284

## Description

The present invention concerns a system and a method for rail vehicle evacuation.

The present invention is directed to the protection of passengers evacuating a rail vehicle when said rail vehicle stopped at a place outside a station with its doors opened, putting passengers evacuating the rail vehicle in danger. The present invention concerns in particular the railway sector, wherein a rail vehicle according to the invention might be for instance any guided public transport such as subways, trains or train units, etc., as well as load transporting means such as, for example, freight trains, for which safety is a very important factor and which are guided along a railway or track by at least one rail, usually two rails.

Document DE 10 2013 210081 A1 discloses a known method and a system for automatically setting up a zone of protection around a rail vehicle in evacuation.

In case of driverless rail vehicle in evacuation, i.e. wherein the driverless rail vehicle had for example a failure and is stopped outside a station with doors opened, passengers can possibly go on track and therefore other trains shall be forbidden to run in an area surrounding the driverless rail vehicle at standstill. In the case of failed rail vehicles managed by an Automatic Train Control (ATC) system, a communication channel with an Automatic Train Supervision (ATS) system is used for enabling the cutting of the power of a section of track comprising the failed rail vehicle and setting a restrictive route on both sides of said section of track via interlocking (IXL). While prohibiting access to said area can be thus automatically done for rail vehicles managed by an ATC system, manual rail vehicles that are free of any ATC system still have to be informed about the presence of a rail vehicle in evacuation on said area, for example by using radio communication for informing drivers in the vicinity.

According to the present invention, the ATC system is a system for automatically controlling rail vehicle movements on a rail network, enforcing rail vehicle safety and directing rail vehicle operations. An ATC system comprises usually the ATS system, which enables monitoring rail vehicles and adjusting performance of individual rail vehicles for maintaining schedules. Usually, the ATC system is split between an on-board control unit (OBCU), which equips the rail vehicle and is responsible for the control of the rail vehicle movement it equips, and a wayside control unit (WCU) responsible for rail vehicle movement control over one or several track or network sections, the WCU being a ground device capable of exchanging information with the OBCU of each rail vehicle equipped with said OBCU and that is moving on said one or several track or network sections.

An objective of the present invention is to propose a system and a method that ensures passengers safety when evacuating a rail vehicle in a mixed railway environment (i.e. comprising driverless rail vehicles, rail vehicles with driver, rail vehicles equipped with driving automatisms and/or control systems, rail vehicles unequipped with said driving automatisms and/or control systems, etc.).

Said objective is achieved according to the present invention by a method and system for automatically setting up a zone of protection around a rail vehicle in evacuation according to the object of the independent claims. The following description provides additional details and advantages of the invention.

The present invention concerns notably a method for automatically setting up a zone of protection around a rail vehicle in evacuation (hereafter RVE) at standstill on a track section of a rail network, said zone of protection being configured in particular for ensuring passenger safety for passengers evacuating said RVE, the method according to the invention comprising the steps of claim 1:
- receiving a message reporting a rail vehicle in evacuation on said rail network and determining the position of the RVE on the track section of the rail network, notably the position of the front end of the RVE and/or the position of its rear end, and/or any position in between. The reception of the message and the determination of the position of the RVE are carried out by a WCU responsible for rail vehicle movements on said track section and preferentially for rail vehicle movements on at least a part of said rail network. For instance, the rail vehicle periodically and automatically provides a position report to the WCU when moving on said part of the rail network for which the WCU is responsible for. Said position report comprises the message reporting the status "in evacuation" of the RVE, associating therefore a position of the rail vehicle and its status "in evacuation". In other words, the RVE position might be determined by the WCU from said position report, that is for example sent an on-board control unit (OBCU) of an ATC system controlling the RVE, wherein said position report comprises additionally said message reporting the "in evacuation" status of the rail vehicle. Optionally, the WCU is able to determine the position of the RVE from data sent by a track vacancy system (TVS), such as an axle counter or a track circuit, and/or to correlate the position determined from data sent by the TVS with the position determined from the position report. In particular, the WCU according to the invention is able to automatically determine the position of a RVE free of driving automatisms from said data sent by the TVS when receiving said message reporting that the RVE free of driving automatisms is "in evacuation". Said message might be for example send by the driver of the RVE free of driving automatism, using e.g. an emergency button. The method according to the invention comprises informing at least one IXL about the presence of the RVE on the track section, wherein said IXL is configured for managing rail vehicle movement on said track section on which the RVE is at standstill. According to the present invention, the RVE position might be determined by the WCU from a position report sent by an ATC system controlling the RVE, and/or from information sent by an ATC system controlling another rail vehicle that has detected the RVE on the track section, and/or from information provided by an operator, and/or from information provided by a track vacancy system.. The RVE might know its own position (or location) from odometry systems such as balises, radars, GPS, and provides information about said position in said position report. The WCU is notably configured for reporting track occupation status of said track section of the rail network to the IXL managing rail vehicle movements on said track section, informing for example the IXL about the presence of a RVE on a track section controlled by said IXL. The RVE sends the position report to at least one WCU controlling track occupation of said track section on which the RVE is at standstill, the WCU forwarding optionally then said information to the IXL;
- automatically determining by said WCU a triggering alarm zone (TAZ) for the RVE and one or several Run Authorization Zone (RAUZ) for said TAZ, wherein the TAZ is determined, by the WCU, from the position of the RVE. At least one RAUZ is defined for each TAZ in a track database (TDB) that might equip said WCU. The TDB is configured for defining for each TAZ one or several RAUZ in function of the RVE location, for example in function of the position of the front end and/or rear end of the RVE, taking account for instance of the rail network topology such as a presence of a tunnel at the location of the RVE, the presence of tracks in the vicinity of the RVE location, etc). Each TAZ defines a different zone of the rail network, so that the latter might be split up into TAZs, wherein each TAZ may comprises one or several track sections depending on the rail network topology. Preferentially, the TDB is configured for having each possible position of the RVE on track, for example the position of the front end of the RVE and/or the position of the rear end of the RVE, and/or any position defined between the front end and the rear end of the RVE and determined by the WCU, falling within a single TAZ of the TAZs that compose the rail network. The TAZ is a zone of the rail network defined for a set of positions of the rail network wherein a rail vehicle might be in evacuation, and for each TAZ, at least one RAUZ is defined, wherein each RAUZ is a zone of the rail network characterized by a binary status: either restrictive or unrestrictive. In the restrictive state, any movement through or any access to the zone defined by the RAUZ is forbidden for a rail vehicle of the rail network; in the unrestrictive state, a rail vehicle may access and/or go through said zone. According to the present invention, each determined position of the RVE on a track of the rail network is used for determining the location of the RVE compared to the rail network infrastructure and for automatically triggering a TAZ, one and only one TAZ per determined position, which will itself trigger one or several RAUZ;
- setting the status of each previously determined RAUZ to restrictive by means of the WCU, and sending, by means of the WCU, each RAUZ restrictive status to the IXL managing rail vehicle movement for said track section and to each OBCU of ATC systems of each rail vehicle in the vicinity of said track section for preventing a rail vehicle moving on, e.g. accessing and/or going through, the RAUZ having a restrictive status. Each RAUZ status is sent to the IXL and each OBCU of the ATC system equipping each rail vehicle having a movement defined by their ATC system and that comprises at least one position falling within said RAUZ having a restrictive status;
- setting physical signaling to restrictive for preventing movement of rail vehicles through the RAUZ, wherein said setting is preferentially performed by means of the IXL from the reception of the RAUZ restrictive status. Advantageously, even unequipped rail vehicles are therefore prevented accessing a RAUZ by updating physical signaling in function of the change of status of a RAUZ so that access to a RAUZ whose status has been set restrictive is prevented for ATC and unequipped rail vehicles by means of the physical signaling.

The invention also concerns in particular a system according to claim 9 for setting up a zone of protection for ensuring passenger safety for passengers evacuating a rail vehicle at standstill on a track of a rail network, said system comprising:
- at least one WCU of an ATC system, wherein each WCU is configured for rail vehicle movement control over one or several track or network sections of the rail network, the WCU being further configured for exchanging information with an OBCU of said ATC system, wherein the OBCU is an on-board device configured for equipping a rail vehicle and controlling its movement over the rail network, said WCU being able to determine a rail vehicle occupancy of each track section it controls, the WCU being capable of communicating with an IXL equipping a track section, notably for informing the latter about track section occupancy;
- said IXL, configured for equipping the track section and for managing rail vehicle movement through at least said track section;
   wherein
- each WCU is configured for automatically determining a position of a rail vehicle in evacuation on the track section it controls at reception of a message reporting that said rail vehicle is "in evacuation", the WCU being further configured for automatically determining a TAZ and one or several RAUZ for each TAZ, wherein said TAZ is determined in function of the position or location of the RVE on the track section, and one or several RAUZ for each TAZ, wherein each RAUZ is a zone of the rail network characterized by a binary status: either restrictive or unrestrictive. The WCU comprises a TDB defining sets of rail network positions, said sets being preferentially non-overlapping sets, and for each set of rail network positions a TAZ, a single TAZ, and for each TAZ one or several RAUZ, the WCU being configured for determining the TAZ and RAUZ in function of predefined information comprised in said TDB, notably from the sets of position and corresponding TAZ and RAUZ;
- each WCU is configured for setting the status of each determined RAUZ to restrictive for preventing other rail vehicles to access the RAUZ, and sending each RAUZ restrictive status to the IXL;
- each IXL being further configured for updating rail vehicle movement or authorization and physical signaling for preventing any movement through or on a RAUZ whose status has been set to restrictive, e.g. by setting signals to stop for routes that are leading into the RAUZ.

In particular, the method according to the invention may comprise detecting the RVE by a device or an operator. For instance, an operator may detect said RVE on a track section and activate a signal, or a driver of a rail vehicle free of automatisms may activate such a signal when the status of the rail vehicle becomes "in evacuation", e.g. by pressing an emergency button or plunger, that informs the WCU managing rail vehicle occupancy for said track section about the presence of the RVE on said track section. Said signal may also communicate the position of the RVE on the rail network to other rail vehicles, for example to the ATC system controlling a rail vehicle, and/or to IXL managing rail vehicle movements on said track section.

Further aspects of the present invention will be better understood through the following drawings, wherein like numerals are used for like and corresponding parts:
- Figure 1: schematic illustration of the system according to the invention.
- Figure 2: schematic illustration of the relation between TAZ and RAUZ according to the invention.

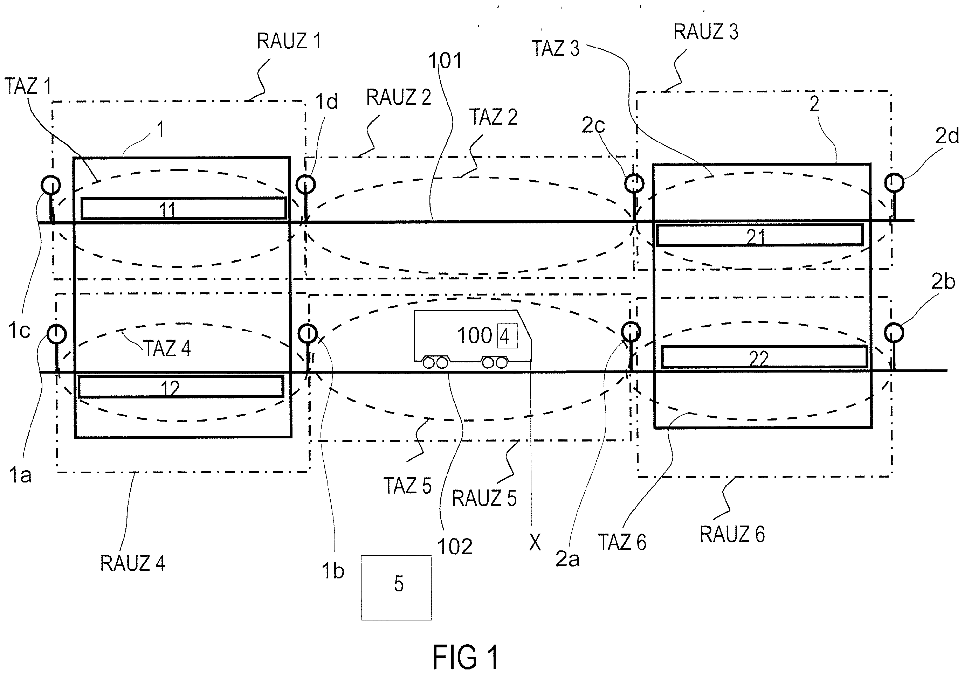

Figure 1 shows a rail network comprising tracks, for example a first track 101 and a second track 102, wherein track 102 comprises a RVE 100 at a position X on the rail network. The rail network comprises stations, for example a first station 1 and a second station 2, wherein the first station 1 comprises for instance a first platform 11 serving track 101 and a second platform 12 serving track 102, wherein the first platform 101 and second platform 102 are for the present illustration separated from each other only by the tracks 101 and 102. The second station 2 comprises in particular a first platform 21 serving the first track 101 and a second platform 22 serving the second track 102, wherein platforms 21 and 22 are located in two different tunnels. The rail network further comprises physical signaling on the first track 101, respectively on the second track 102, in particular physical signaling 1c and 1d, respectively 1a and 1b, which control the access to first station 1, physical signaling 2c and 2d, respectively 2a and 2b, which control the access to second station 2, and physical signaling 1d and 2c, respectively 1b and 2a, further controlling the access to the network area of the first track 101, respectively second track 102, comprised between the first station 1 and the second station 2. Rail vehicles on track 102 are in particular moving from station 1 to station 2, and rail vehicles on track 101 are in particular moving from station 2 to station 1. An ATC system comprising one or several OBCUs 4 each equipping a rail vehicle and at least one WCU 5 is in charge of automatic control of rail vehicle movements over the rail network. Each OBCU 4 is configured for being installed on-board a rail vehicle, so that at least part of the rail vehicles moving on said rail network are equipped with an OBCU 4. The WCU 5 is configured for being installed on the ground, at a remote location from said OBCU, and is configured for communicating with each OBCU of rail vehicles moving on track sections it is responsible for.

Positions (e.g. geographical positions) on the rail network might be split up in different TAZ, respectively TAZ 1 - TAZ 6 (each represented with an ellipse in dashed line), wherein each TAZ is a zone of the rail network preferentially free of overlapping with another TAZ, i.e. with a zone of the rail network defined by said another TAZ. According to the schematic representation of a rail network given in Fig. 1, TAZ 1, respectively TAZ 4, is a geographical zone surrounding the first track 101, respectively the second track 102, at the first station 1. TAZ 3, respectively TAZ 6, is a geographical zone surrounding the first track 101, respectively the second track 102, at the second station 2. TAZ 3, respectively TAZ 5, is a geographical zone surrounding the first track 101, respectively the second track 102, between the first station 1 and the second station 2.

According to the present invention, the WCU 5 is configured for triggering an alarm zone, i.e. a TAZ, as soon as it receives a message or notification reporting a rail vehicle in evacuation (i.e. stopped/at standstill with doors opened outside a station) on a track or network section it is responsible for. For this purpose, it determines the position of the RVE on said track section, or preferentially a set of positions defining the position of the RVE on said track section, said set of positions comprising for example the position of the front end of the RVE and/or the position of the rear end of the RVE and/or any position comprised between the position of the front end and the rear end of said RVE, , and compare each of said position to positions predefined in a TDB and configured for triggering the alarm zone (in other words for activating the TAZ). The WCU according to the invention is thus in particular able to match different positions of a rail vehicle in evacuation on a track 102 with predefined positions recorded in the TDB and to implement a TAZ (i.e. to trigger an alarm zone) for each matching position, wherein a single TAZ (i.e. one and only one TAZ) is defined for each of said position recorded/predefined in the TDB. According to the present invention, a same TAZ might be thus predefined for several positions in the TDB, but each position determined for a RVE on a track of the track section will trigger a single TAZ. Each TAZ is defined in a TDB of the WCU for a set of track positions among track positions controlled by the WCU, wherein if a rail vehicle is in evacuation at one of the positions of said set, then the WCU, which is configured for controlling rail vehicle occupancy and movement for at least said set of positions, automatically determines which TAZ corresponds to the position wherein the RVE is located, i.e. which TAZ has to be triggered or activated for each position determined by the WCU 5 for the RVE on the track of said track section. The TDB according to the invention is thus in particular configured for defining a single TAZ per non-overlapping sets of positions on the rail network wherein a rail vehicle might be in evacuation, and for each TAZ, one or several RAUZ in function of a rail network topology and/or infrastructure.
As exemplified in Fig. 1, a RVE 100 is located on a track section whose occupancy is controlled by WCU 5. The WCU 5 is indeed configured for controlling the occupancy by rail vehicles and rail vehicle movement for said track section and is able to determine that RVE 100 is at standstill on said track section at a position X or at a set of positions. The position X might be the position of the front end of the rail vehicle, or the position of the rear end of the rail vehicle, or any position in between. The set of positions is in particular configured for defining a position interval that defines the position of the whole length of the rail vehicle (i.e. from its rear end to its front end) on the track section. The WCU 5 is further configured for automatically determining, from the position X of the RVE 100 on track 102 of said track section, which TAZ has to be activated or triggered for the position X of the RVE 100. According to the preferred embodiment of Fig. 1, the WCU 5 will determine that the position X of the RVE 100 belongs to the set of positions defined for TAZ 5 in a TDB. The WCU 5 is notably configured for determining the position of the RVE 100 on the track 102 of the track section from track occupancy information provided by track vacancy systems such as axle counters or track circuits, and/or from a train position report received by the WCU and provided by the OBCU, and/or from information provided by an operator and/or a control station. The WCU 5 may further comprise said TDB defining a set of positions on the rail network, and for each of said positions, a TAZ, and for each TAZ, one or several RAUZ (represented by dashed-dotted rectangles in Fig. 1). The WCU 5 is configured for automatically triggering/activating the TAZ, a single TAZ, defined for a position in the TDB that corresponds to the RVE position determined by the WCU 5. The WCU according to the invention is in particular configured for changing the status of each RAUZ defined for each triggered/activated TAZ in said TDB from unrestrictive to restrictive, in order to indicate to other rail vehicles that a RVE is located at a position on the track falling within the set of positions defined in the TDB for said TAZ. Optionally, the WCU 5 is configured for changing the status of a RAUZ from restrictive to unrestrictive as soon as an information regarding the end of the evacuation of the RVE is received, and for automatically transmitting the unrestrictive status to the IXL in order to update rail vehicle movement on the track section and authorize rail vehicle movement through and/or on each RAUZ whose status has been changed to unrestrictive.

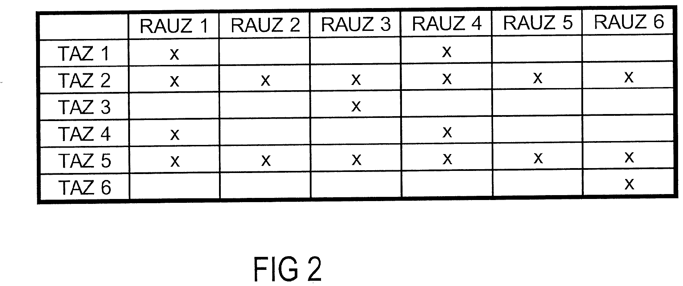

An illustration of a track database according to the invention is given in Fig. 2. In the particular case of Fig. 1 and as exemplified by the TDB of Fig. 2, the TDB is configured for making the WCU 5 changing the status of RAUZ 1 - RAUZ 6 from unrestrictive to restrictive if the WCU 5 determines that a RVE is located at a position falling within the set of positions defined for TAZ 5. Consequently physical signals 1a, 1b, 2d, 2a, 1d, 2c, 1c, will be set to restrictive by the IXL in the case exemplified by Fig. 1 and Fig. 2.

According to Fig. 2, a RVE located at a position falling within the set of positions defined for TAZ3 will only triggers a change of the status of RAUZ 3 from unrestrictive to restrictive, since the second platform 21 is located in a tunnel preventing the passengers accessing track 102 located in another tunnel. At the opposite, a RVE located at a position that is determined by a WCU as falling within the set of positions defined in the TDB for TAZ 1 will trigger RAUZ1 and RAUZ 4, since there is a risk for passengers to evacuate through track 102.

The WCU according to the invention is configured for sending information related to each change of a status of a RAUZ to an IXL, in particular to the IXL that is configured for controlling rail vehicle movement on the track section wherein said RVE 100 is located and at standstill. According to the present invention, the IXL is configured for automatically preventing another rail vehicle to move on a RAUZ whose status has been set to restrictive by the WCU by setting physical signaling to restrictive and informing the OBCU of rail vehicles which may have a movement defined through the RAUZ. Preferentially, the WCU 5 is further configured for automatically communicating to each OBCU of rail vehicles approaching a track section wherein a RVE is located, and/or to each rail vehicle for which a movement is defined to pass through the track section wherein the RVE is located, information comprising the RAUZ for which the status has been set to restrictive in order to prevent said rail vehicle to access the track section wherein the RVE is located.

According to the present invention, ATC system functionality together with IXL features might be used for preventing rail vehicles to access a track section wherein a RVE is located by setting up a RAUZ, i.e. a zone of protection configured for ensuring passengers safety in case of a RVE. In particular, if for instance a signal is sent to an IXL by pressing an emergency plunger in a station, said signal informing the IXL that a RVE is located on a track section, then the IXL according to the invention is configured for automatically informing the WCU 5 controlling the movement of a rail vehicle whose route passes through said track section that a RVE is located on said track section and for activating in parallel restrictions on routes related to the emergency plunger. In particular, based on information from the IXL, for example an identification of the track section on which the RVE is at standstill, the WCU 5 is configured for setting each RAUZ defined for the TAZ that is defined for positions wherein the RVE is at standstill to restrictive and for restricting rail vehicle movement of each rail vehicle controlled by an ATC system. In this way both the ATC controlled rail vehicles and the unequipped rail vehicles running on physical signals are stopped outside each defined RAUZ.

Each RAUZ is defined in the TDB as a geographical area or zone spanned on both sides of a track. The RAUZ whose status has to be set to restrictive is determined from the localization, e.g. head and tail, of a RVE. The TDB is configured for defining, for each possible position of a RVE on the rail network, a single TAZ triggering one or several RAUZ. In particular, the IXL is capable to determine a route restriction for a RAUZ from a route table comprised in the IXL and depending on the topology of the rail network. As soon as a restriction is determined by the IXL for a route, then each physical signal controlling access to said route is set to stop. According to the present invention, if a RVE is located on positions falling within a first set of positions defined for a first TAZ and a second set of positions defined for a second TAZ (e.g. head and tail located on two different TAZ), then each RAUZ defined for each of the first and second TAZ has its status changed from unrestrictive to restrictive. To summarize, the present invention proposes a system and method solving the problem of RVE on mixed traffic rail network, wherein ATC and unequipped rail vehicles might be automatically informed about a presence of a RVE by setting status of RAUZ to restrictive, the system acting preferentially directly on interlocking by configuration, free of the need of implementing new features in interlocking.

## Claims

1. Method for automatically setting up a zone of protection around a rail vehicle in evacuation - hereafter RVE (100) - at standstill on a track section of a rail network, the method comprising:
- receiving a message reporting a RVE (100) and determining by a wayside control unit - hereafter "WCU" (5)-, which is configured for controlling rail vehicle occupancy and movement for said track section, the position of the RVE (100) on the track section of the rail network;
- automatically determining by said WCU (5) a triggering alarm zone - hereafter TAZ (TAZ 1 - TAZ 6) - for the RVE (100) and one or several Run Authorization Zone - hereafter RAUZ (RAUZ 1 - RAUZ 6) - for each triggered TAZ, wherein the TAZ is a geographical zone surrounding the track of the rail network determined from said position of the RVE and defined for a set of positions of the rail network wherein a rail vehicle might be in evacuation, wherein said WCU (5) is configured for matching different positions of said RVE on track with predefined positions recorded in a track database - hereafter "TDB"- and to implement the TAZ for each matching position, wherein one and only one TAZ is defined for each of said position predefined in the TDB, and for each TAZ, at least one RAUZ is defined in function of a rail network topology and/or infrastructure, wherein the triggered RAUZ set up said zone of protection in order to ensure passenger safety for passengers evacuating the RVE, wherein each RAUZ is a zone of the rail network **characterized by** a binary status: either restrictive or unrestrictive, wherein in the restrictive state, any movement through or any access to the zone defined by the RAUZ is forbidden for a rail vehicle of the rail network; and in the unrestrictive state, a rail vehicle may access and/or go through said zone;
- setting by said WCU the status of each previously determined RAUZ to restrictive, and sending each RAUZ restrictive status to an interlocking managing route movement for the track section wherein the RVE (100) is located;
- setting physical signaling to restrictive for preventing movement of rail vehicles through the RAUZ.

2. Method according to claim 1, wherein each RAUZ restrictive status is sent to each on-board control unit (4) of each rail vehicle in the vicinity of the RVE (100) for preventing rail vehicles movement on the RAUZ having a restrictive status.

3. Method according to claim 1 or 2, wherein the WCU (5) is configured for determining the RVE (100) position and receiving said message.

4. Method according to one of the claims 1 to 3, wherein the TDB is used for determining the TAZ in function of the RVE (100) position and for determining the RAUZ in function of the rail network topology and/or infrastructure.

5. Method according to claim 4, wherein the TAZ (TAZ 1 - TAZ 6) and the RAUZ are determined by the WCU (5) from the position of the RVE (100) and information comprised in the TDB.

6. Method according to one of the claims 1-5, wherein each TAZ defines a different zone of the rail network so that TAZs are free of overlapping.

7. Method according to one of the claims 1-6, wherein said physical signaling setting is performed by the interlocking.

8. Method according to one of the claims 1 to 7, wherein the WCU (5) is configured for determining the RVE (100) position from a position report sent by an Automatic Train Control system controlling said RVE (100), and/or from information provided by an Automatic Train Control system of another rail vehicle having detected the RVE (100), and/or from information provided by an operator, and/or from information provided by a track vacancy system.

9. System for setting up a zone of protection for ensuring passenger safety for passengers evacuating a rail vehicle in evacuation - hereafter RVE (100) - at standstill on a track (102) of a rail network, said system comprising:
- at least one wayside control unit - hereafter WCU (5), wherein each WCU is configured for rail vehicle movement control over a track section of said rail network, capable of communicating with an interlocking equipping the track section and with on-board control unit (4) configured for the automatic control of rail vehicle movement;
- said interlocking, configured for equipping the track section and for managing a rail vehicle movement through the track section;
wherein
- each WCU (5) is configured for automatically determining a position of a rail vehicle in evacuation on the track section it controls at reception of a message reporting that said rail vehicle is "in evacuation", the WCU being further configured for automatically determining a triggering alarm zone - hereafter TAZ (TAZ 1 - TAZ 6) - in function of the determined position for the RVE (100) on the track section and one or several Run Authorization Zone - hereafter RAUZ (RAUZ 1 - RAUZ 6) - for each triggered TAZ, wherein the TAZ is a geographical zone surrounding the track, wherein said WCU (5) is configured for matching different positions of said RVE on track with predefined positions recorded in a track database - hereafter "TDB"- and to implement the TAZ for each matching position, wherein one and only one TAZ is defined for each of said position predefined in the TDB, and for each TAZ said one or several RAUZ is defined in function of a rail network topology and/or infrastructure, wherein the triggered RAUZ set up said zone of protection in order to ensure passenger safety for passengers evacuating the RVE, wherein each RAUZ is a zone of the rail network **characterized by** a binary status: either restrictive or unrestrictive, wherein in the restrictive state, any movement through or any access to the zone defined by the RAUZ is forbidden for a rail vehicle of the rail network; and in the unrestrictive state, a rail vehicle may access and/or go through said zone;
- each WCU (5) is configured for setting the status of each determined RAUZ to restrictive for preventing other rail vehicles to access the RAUZ whose status is restrictive, and for sending each RAUZ restrictive status to the interlocking;
- the interlocking being configured for updating rail vehicle movement and physical signaling for preventing any movement of a rail vehicle through or on a RAUZ whose status has been set to restrictive.

10. System according to claim 9, wherein the WCU (5) comprises the TDB and is configured for determining the TAZ and each RAUZ in function of information comprised in said TDB.

11. System according to claim 10, wherein said TDB is configured for defining a single TAZ per non-overlapping sets of positions defined for the rail network, wherein each set of positions defines positions of the rail network wherein a rail vehicle might be in evacuation, and for each TAZ one or several RAUZ in function of the rail network topology and/or infrastructure.

## Patentansprüche

1. Verfahren zum automatischen Einrichten einer Schutzzone für eine Schienenfahrzeugevakuierung (Rail Vehicle Evacuation) - nachfolgend RVE (100) - um ein auf einem Gleisabschnitt eines Streckennetzes stillstehendes Schienenfahrzeug herum, wobei das Verfahren umfasst:
- Empfangen einer eine RVE (100) meldenden Nachricht und Bestimmen einer Streckenkontrolleinheit (Wayside Control Unit) - nachfolgend WCU (5) -, die dafür eingerichtet ist, eine Schienenfahrzeugbelegung und - bewegung für den Gleisabschnitt sowie die Position der RVE (100) auf dem Gleisabschnitt des Streckennetzes zu kontrollieren;
- automatisches Bestimmen durch die WCU (5) einer Alarmauslösezone (Triggering Alarm Zone) - nachfolgend TAZ (TAZ 1 - TAZ 6) - für die RVE (100) sowie einer oder mehrerer Fahrtautorisierungszonen (Run Authorization Zone) - nachfolgend RAUZ (RAUZ 1 - RAUZ 6) - für jede ausgelöste TAZ, wobei die TAZ eine das Gleis des Streckennetzes umgebende geographische Zone ist, festgelegt ab der Position der RVE und definiert für eine Reihe von Positionen des Streckennetzes, wobei sich ein Schienenfahrzeug in Evakuierung befinden kann, wobei die WCU (5) dafür ausgelegt ist, verschiedene Positionen der RVE auf dem Gleis mit vorgegebenen, in einer Streckendatenbank (Track Database) - nachfolgend TDB - erfassten Positionen abzugleichen und die TAZ für jede übereinstimmende Position zu implementieren, wobei für jede in der TDB vorgegebene Position eine, und nur eine, TAZ definiert ist, und für jede TAZ mindestens eine RAUZ in Abhängigkeit von einer Streckennetztopologie und/oder -infrastruktur definiert ist, wobei die ausgelöste RAUZ die Schutzzone einrichtet, um die Sicherheit der bei der RVE evakuierten Passagiere sicherzustellen, wobei jede RAUZ eine Zone des Streckennetzes ist, die durch einen binären Status gekennzeichnet ist: entweder restriktiv oder nicht restriktiv, wobei im restriktiven Status jede Fahrt durch oder jede Einfahrt in die von der RAUZ definierten Zone für alle Schienenfahrzeuge des Streckennetzes verboten ist, und im nicht restriktiven Status ein Schienenfahrzeug in die Zone einfahren und/oder durchfahren darf;
- Einstellen, durch die WCU, des Status jeder zuvor festgelegten RAUZ auf restriktiv, und Senden jedes restriktiven RAUZ-Status an ein Stellwerk, das die Streckenbewegung für jeden Gleisabschnitt verwaltet, in der sich die RVE (100) befindet;
- Einstellen einer physikalischen Signalgebung auf restriktiv, um eine Bewegung von Schienenfahrzeugen durch die RAUZ zu verhindern.

2. Verfahren nach Anspruch 1, wobei jeder restriktive RAUZ-Status an jede bordeigene Steuereinheit (4) jedes Schienenfahrzeugs in der Nähe der RVE (100) übermittelt wird, um Schienenfahrzeugbewegungen in der RAUZ mit einem restriktiven Status zu verhindern.

3. Verfahren nach Anspruch 1 oder 2, wobei die WCU (5) dafür ausgelegt ist, die Position der RVE (100) zu ermitteln und die Nachricht zu empfangen.

4. Verfahren nach einem der Ansprüche 1 bis 3, wobei die TDB benutzt wird, um die TAZ in Abhängigkeit von der Position der RVE (100) zu ermitteln und die RAUZ in Abhängigkeit von der Streckennetztopologie und/oder -infrastruktur zu ermitteln.

5. Verfahren nach Anspruch 4, wobei die TAZ (TAZ 1 - TAZ 6) und die RAUZ durch die WCU (5) anhand der Position der RVE (100) und in der TDB enthaltenen Informationen bestimmt wird.

6. Verfahren nach einem der Ansprüche 1 bis 5, wobei jede TAZ eine andere Zone des Streckennetzes definiert, so dass sich die TAZ nicht überlappen.

7. Verfahren nach einem der Ansprüche 1 bis 6, wobei die physikalische Signalgebungseinstellung vom Stellwerk vorgenommen wird.

8. Verfahren nach einem der Ansprüche 1 bis 7, wobei die WCU (5) dafür ausgelegt ist, die Position der RVE (100) anhand eines Positionsberichts zu ermitteln, der von einem die RVE (100) kontrollierenden automatischen Zugkontrollsystem übermittelt wurde, und/oder anhand von Informationen, die von einem automatischen Zugkontrollsystem eines anderen Schienenfahrzeugs bereitgestellt wurden, das die RVE (100) erkannt hat, und/oder anhand von Informationen, die von einem Bediener bereitgestellt wurden, und/oder anhand von Informationen, die von einem Gleisfreimeldesystem bereitgestellt wurden.

9. System zum Einrichten einer Schutzzone um ein auf einem Gleisabschnitt (102) eines Streckennetzes stillstehendes Schienenfahrzeug herum, um die Sicherheit der bei einer Schienenfahrzeugevakuierung (Rail Vehicle Evacuation) - nachfolgend RVE (100) - evakuierten Passagiere sicherzustellen, wobei das Verfahren umfasst:
- mindestens eine Streckenkontrolleinheit - nachfolgend WCU (5) -, wobei jede WCU für die Schienenfahrzeug-Bewegungskontrolle in einem Gleisabschnitt des Streckennetzes ausgelegt ist, mit einem den Gleisabschnitt bestückenden Stellwerk und mit einer bordeigenen Steuereinheit (4) kommunizieren kann, die für die automatische Steuerung der Schienenfahrzeugbewegung ausgelegt ist;
- das Stellwerk, das dafür ausgelegt, den Gleisabschnitt zu bestücken und eine Schienenfahrzeugbewegung durch den Gleisabschnitt zu verwalten;
wobei
- jede WCU (5) dafür ausgelegt ist, beim Empfang einer Nachricht mit dem Hinweis, dass sich das Schienenfahrzeug "in Evakuierung" befindet, automatisch eine Position des in Evakuierung befindlichen Schienenfahrzeugs in dem von ihr kontrollierten Gleisabschnitt zu ermitteln, wobei die WCU weiterhin dafür ausgelegt ist, automatisch eine Alarmauslösezone - nachfolgend TAZ (TAZ 1 - TAZ 6) - in Abhängigkeit der ermittelten Position für die RVE (100) in dem Gleisabschnitt sowie eine oder mehrere Fahrtautorisierungszonen - nachfolgend RAUZ (RAUZ 1 - RAUZ 6) - für jede ausgelöste TAZ zu ermitteln, wobei die TAZ eine das Gleis umgebende geographische Zone ist, wobei die WCU (5) dafür ausgelegt ist, verschiedene Positionen der RVE auf dem Gleis mit vorgegebenen, in einer Streckendatenbank - nachfolgend TDB - erfassten Positionen abzugleichen und die TAZ für jede übereinstimmende Position zu implementieren, wobei für jede der in der TDB vorgegebenen Positionen eine, und nur eine, TAZ definiert ist, und für jede TAZ eine oder mehrere RAUZ in Abhängigkeit einer Streckennetztopologie und/oder -infrastruktur definiert sind, wobei die ausgelöste RAUZ die Schutzzone einrichtet, um die Sicherheit der bei der RVE evakuierten Passagiere sicherzustellen, wobei jede RAUZ eine Zone des Streckennetzes ist, die durch einen binären Status gekennzeichnet ist: entweder restriktiv oder nicht restriktiv, wobei im restriktiven Status jede Fahrt durch oder jede Einfahrt in die von der RAUZ definierten Zone für alle Schienenfahrzeuge des Streckennetzes verboten ist, und im nicht restriktiven Status ein Schienenfahrzeug in die Zone einfahren und/oder durchfahren darf;
- jede WCU (5) dafür ausgelegt ist, den Status jeder ermittelten RAUZ auf restriktiv einzustellen, um andere Schienenfahrzeuge daran zu hindern, in die RAUZ mit dem Status restriktiv einzufahren, und jeden restriktiven RAUZ-Status an das Stellwerk zu übermitteln;
- das Stellwerk dafür ausgelegt ist, Schienenfahrzeugbewegungen zu aktualisieren und physikalisch zu signalisieren, um jede Bewegung eines Schienenfahrzeugs durch oder in einer RAUZ zu verhindern, deren Status auf restriktiv gesetzt wurde.

10. System nach Anspruch 9, wobei die WCU (5) die TDB umfasst und dafür ausgelegt ist, die TAZ und jede RAUZ in Abhängigkeit von in der TDB enthaltenen Informationen zu ermitteln.

11. System nach Anspruch 10, wobei die TDB dafür ausgelegt ist, eine einzelne TAZ anhand einer für das gesamte Streckennetz definierten Gruppe nicht überlappender Positionen zu bestimmen, wobei jede Gruppe von Positionen wiederum Positionen des Streckennetzes definiert, an denen sich ein Schienenfahrzeug in Evakuierung befindet, sowie für jede TAZ eine oder mehrere RAUZ in Abhängigkeit von der Streckennetztopologie und/oder -infrastruktur.

## Revendications

1. Procédé pour mettre en place de manière automatique une zone de protection autour d'un véhicule ferroviaire en cours d'évacuation - ci-après RVE (100) - à l'arrêt sur une section de voie ferrée d'un réseau ferroviaire, le procédé comprenant :
- la réception d'un message qui rapporte un RVE (100) et qui détermine, au moyen d'une unité de commande en bordure de voie ferrée - ci-après "WCU" (5) -, laquelle est configurée pour commander la présence et le déplacement de véhicules ferroviaires pour ladite section de voie ferrée, la position du RVE (100) sur la section de voie ferrée du réseau ferroviaire ;
- la détermination de manière automatique, par ladite WCU (5), d'une zone d'alarme de déclenchement - ci-après TAZ (TAZ 1 - TAZ 6) - pour le RVE (100) et d'une ou de plusieurs zone(s) d'autorisation de roulage - ci-après RAUZ (RAUZ 1 - RAUZ 6) - pour chaque TAZ déclenchée, dans lequel la TAZ est une zone géographique qui entoure la voie ferrée du réseau ferroviaire, laquelle est déterminée à partir de ladite position du RVE et est définie pour un jeu de positions du réseau ferroviaire au niveau desquelles un véhicule ferroviaire pourrait être en cours d'évacuation ; dans lequel ladite WCU (5) est configurée pour faire concorder différentes positions dudit RVE sur une voie ferrée avec des positions prédéfinies qui sont enregistrées dans une base de données de voie (s) ferrée (s) - ci-après "TDB" - et afin de mettre en oeuvre la TAZ pour chaque position en concordance, dans lequel une et seulement une TAZ est définie pour chaque dite position prédéfinie dans la TDB, et pour chaque TAZ, au moins une RAUZ est définie en fonction d'une topologie de réseau ferroviaire et/ou d'une infrastructure afférente, dans lequel les RAUZ déclenchées mettent en place ladite zone de protection afin d'assurer la sécurité des passagers pour les passagers qui sont en train d'être évacués hors du RVE, dans lequel chaque RAUZ est une zone du réseau ferroviaire qui est **caractérisée par** un état binaire : soit restrictif, soit non restrictif, dans lequel, dans l'état restrictif, un quelconque déplacement au travers de la zone définie par la RAUZ ou un quelconque accès à cette même zone est interdit pour un véhicule ferroviaire du réseau ferroviaire ; et dans l'état non restrictif, un véhicule ferroviaire peut accéder à ladite zone et/ou se déplacer au travers de celle-ci ;
- l'instauration, par ladite WCU, de l'état de chaque RAUZ déterminée au préalable comme étant restrictif et l'envoi de chaque état restrictif de RAUZ à un enclenchement qui gère un déplacement en termes de trajet pour la section de voie ferrée au niveau de laquelle le RVE (100) est localisé ; et
- l'instauration d'une signalisation physique dans l'état restrictif pour empêcher le déplacement de véhicules ferroviaires sur la RAUZ.

2. Procédé selon la revendication 1, dans lequel chaque état restrictif de RAUZ est envoyé à chaque unité de commande embarquée (4) de chaque véhicule ferroviaire au voisinage du RVE (100) pour empêcher le déplacement de véhicules ferroviaires sur la RAUZ qui présente un état restrictif.

3. Procédé selon la revendication 1 ou 2, dans lequel la WCU (5) est configurée pour déterminer la position du RVE (100) et pour recevoir ledit message.

4. Procédé selon l'une des revendications 1 à 3, dans lequel la TDB est utilisée pour déterminer la TAZ en fonction de la position du RVE (100) et pour déterminer la RAUZ en fonction de la topologie de réseau ferroviaire et/ou de l'infrastructure afférente.

5. Procédé selon la revendication 4, dans lequel la TAZ (TAZ 1 - TAZ 6) et la RAUZ sont déterminées par la WCU (5) à partir de la position du RVE (100) et de l'information qui est comprise dans la TDB.

6. Procédé selon l'une des revendications 1 à 5, dans lequel chaque TAZ définit une zone différente du réseau ferroviaire de telle sorte que les TAZ soient exemptes de chevauchement.

7. Procédé selon l'une quelconque des revendications 1 à 6, dans lequel ladite instauration de signalisation physique est réalisée par l'enclenchement.

8. Procédé selon l'une des revendications 1 à 7, dans lequel la WCU (5) est configurée pour déterminer la position du RVE (100) à partir d'un rapport de position qui est envoyé par un système de commande automatique de train qui commande ledit RVE (100), et/ou à partir d'une information qui est fournie par un système de commande automatique de train d'un autre véhicule ferroviaire qui a détecté le RVE (100), et/ou à partir d'une information qui est fournie par un opérateur, et/ou à partir d'une information qui est fournie par un système d'état libre de voie ferrée.

9. Système pour mettre en place une zone de protection pour assurer la sécurité des passagers pour les passagers qui sont en train d'être évacués hors d'un véhicule ferroviaire en cours d'évacuation - ci-après RVE (100) - à l'arrêt sur une voie ferrée (102) d'un réseau ferroviaire, ledit système comprenant :
- au moins une unité de commande en bordure de voie ferrée - ci-après WCU (5) -, dans lequel chaque WCU est configurée pour la commande du déplacement de véhicules ferroviaires sur une section de voie ferrée dudit réseau ferroviaire, et peut communiquer avec un enclenchement qui équipe la section de voie ferrée et avec une unité de commande embarquée (4) qui est configurée pour la commande automatique du déplacement de véhicules ferroviaires ;
- ledit enclenchement, configuré pour équiper la section de voie ferrée et pour gérer un déplacement de véhicules ferroviaires sur la section de voie ferrée ; dans lequel :
- chaque WCU (5) est configurée pour déterminer de manière automatique une position d'un véhicule ferroviaire en cours d'évacuation sur la section de voie ferrée qu'elle commande suite à la réception d'un message qui rapporte que ledit véhicule ferroviaire est "en cours d'évacuation", la WCU étant en outre configurée pour déterminer de manière automatique une zone d'alarme de déclenchement - ci-après TAZ (TAZ 1 - TAZ 6) - en fonction de la position déterminée pour le RVE (100) sur la section de voie ferrée et une ou plusieurs zone(s) d'autorisation de roulage - ci-après RAUZ (RAUZ 1 - RAUZ 6) - pour chaque TAZ déclenchée, dans lequel la TAZ est une zone géographique qui entoure la voie ferrée ; dans lequel ladite WCU (5) est configurée pour faire concorder différentes positions dudit RVE sur une voie ferrée avec des positions prédéfinies qui sont enregistrées dans une base de données de voie (s) ferrée (s) - ci-après "TDB" - et afin de mettre en oeuvre la TAZ pour chaque position en concordance, dans lequel une et seulement une TAZ est définie pour chaque dite position prédéfinie dans la TDB, et pour chaque TAZ, lesdites une ou plusieurs RAUZ sont définies en fonction d'une topologie de réseau ferroviaire et/ou d'une infrastructure afférente, dans lequel les RAUZ déclenchées mettent en place ladite zone de protection afin d'assurer la sécurité des passagers pour les passagers qui sont en train d'être évacués hors du RVE, dans lequel chaque RAUZ est une zone du réseau ferroviaire qui est **caractérisée par** un état binaire : soit restrictif, soit non restrictif, dans lequel, dans l'état restrictif, un quelconque déplacement au travers de la zone définie par la RAUZ ou un quelconque accès à cette même zone est interdit pour un véhicule ferroviaire du réseau ferroviaire ; et dans l'état non restrictif, un véhicule ferroviaire peut accéder à ladite zone et/ou se déplacer au travers de celle-ci ;
- chaque WCU (5) est configurée pour instaurer l'état de chaque RAUZ déterminée comme étant restrictif pour empêcher que d'autres véhicules ferroviaires n'accèdent à la RAUZ dont l'état est restrictif, et pour envoyer chaque état restrictif de RAUZ à l'enclenchement ;
- l'enclenchement étant configuré pour mettre à jour un déplacement de véhicules ferroviaires et une signalisation physique pour empêcher un quelconque déplacement d'un véhicule ferroviaire au travers d'une RAUZ dont l'état a été instauré comme étant restrictif ou sur celle-ci.

10. Système selon la revendication 9, dans lequel la WCU (5) comprend la TDB et est configurée pour déterminer la TAZ et chaque RAUZ en fonction de l'information qui est comprise dans ladite TDB.

11. Système selon la revendication 10, dans lequel ladite TDB est configurée pour définir une unique TAZ par jeu de positions non en chevauchement défini pour le réseau ferroviaire, dans lequel chaque jeu de positions définit des positions du réseau ferroviaire au niveau desquelles un véhicule ferroviaire pourrait être en cours d'évacuation, et pour chaque TAZ, une ou plusieurs RAUZ en fonction de la topologie de réseau ferroviaire et/ou de l'infrastructure afférente.
